# EUROPÄISCHE PATENTSCHRIFT

(11) **EP 1 318 045 B1**
(45) Veröffentlichungstag und Bekanntmachung des Hinweises auf die Patenterteilung: **30.11.2005**
(21) Anmeldenummer: 02027184.7
(22) Anmeldetag: 05.12.2002
(51) Int. Cl.: B60P 1/44

(54) **Schwenkbare Sicherungsklappe für eine Ladebordwand**
Pivoting safety flap for a lifting tailgate
Volet pivotant de sécurité pour un hayon élévateur

(30) Priorität: 05.12.2001 DE 10159523
(43) Veröffentlichungstag der Anmeldung: 11.06.2003
(73) Patentinhaber: Peter Maier Leichtbau GmbH, 78224 Singen (DE)
(72) Erfinder: Maier, Peter, 78256 Steisslingen (DE); Kmet, Branislav, 78351 Bodman-Ludwigshafen (DE)
(74) Vertreter: Weiss, Peter

(56) Entgegenhaltungen:
- EP-A- 0 271 441
- EP-B- 0 480 791
- DE-U- 7 637 158
- DE-U- 29 912 961

## Beschreibung

Die Erfindung betrifft eine Ladebordwand, mit zumindest einer um eine Achse in einem Hohlprofil drehbaren Sicherungsklappe, welche von einer Nullpunktfeder in Öffnungs- und in Schliesslage gehalten ist.

Derartige Vorrichtung sind bereits in vielfältiger Form und Ausführung bekannt und gebräuchlich. Eine gattungsgemäß Ladebordwand mit einer Sicherungsklappe ist aus der DE 299 1296141 bekannt, bei welcher durch die Betätigung eines Schubriegels Rastelemente freigegeben werden. Dadurch wirken Federelemente und lassen die Sicherungsklappe nach oben schwenken.

Der grosse Nachteil bei dieser und anderen bekannten Vorrichtungen ist, dass die Sicherungsklappen, wenn sie sich einmal in geschlossenem Zustand befinden, nicht mehr von alleine öffnen. Um sie wieder in den geöffneten Zustand zu versetzt, muss erst ein entsprechender Betätigungshebel od. dgl. betätigt werden. Dies ist umständlich und zeitaufwendig.

Ein weiterer Nachteil besteht darin, dass ein Betätigungshebel meist für mehrere Sicherungsklappen zuständig ist. Das Hochklappen von nur einzelnen Sicherungsklappen ist hier also nicht möglich.

Desweiteren sind die bisher bekannten Abrollsicherungen oftmals sehr kostenintensiv und umständlich in der Herstellung und Bedienung. Es sind viele kleine, einzelne Bestandteile zu fertigen und hinterher in die Ladebordwand einzusetzen, was die gesamte Fertigung sehr aufwendig werden lässt.

Eine Ladebordwand der o.g. Art ist aus der EP 0 480 791 B1 bekannt. Dort stützt sich eine Sicherungsklappe über eine Druckfeder gegen einen Arm ab, der an einem Drehhebel befestigt ist. Je nach Stellung des Drehhebels wird die Sicherungsklappe durch die Druckfeder in Schliesslage oder in Öffnungslage gehalten. Wird in Öffnungslage ein Druck auf die Sicherungsklappe ausgeübt, so bewegt sich diese gegen den Druck der Druckfeder, so dass die Sicherungsklappe nach Aufhebung des Druckes wieder in ihre Öffnungslage zurückgelangt.

Aufgabe der vorliegenden Erfindung ist es, eine Vorrichtung zu schaffen, welche die oben genannten Nachteile verhindert, leicht zu betätigen ist und vielfältigeren Anforderungen Rechnung trägt.

Zur Lösung dieser Aufgabe führt, dass die Nullpunktfeder zwischen der Sicherungsklappe und dem Hohlprofil eingespannt ist und zum Öffnen und zum Halten der Sicherungsklappe in Öffnungslage eine Feder vorgesehen ist, welche unterhalb der Sicherungsklappe gegen diese abstützbar angeordnet ist.

Bevorzugt weist die notwendige Einrichtung lediglich einen Betätigungshebel und eine Feder auf, welche an einer Welle angeordnet sind und mittels derer die Sicherungsklappe in ihre Öffnungslage gebracht werden kann. Die jeweilige Befestigung der beiden Elemente in der Welle kann individuell gestaltet sein. Die Feder wird bevorzugt in einen Schlitz in der Welle gesteckt und dort befestigt. Der Betätigungshebel wird bevorzugt mittels eines Bolzens in der Welle befestigt. Jede andere Befestigung ist denkbar.

Die Anordnung des Betätigungshebels ist dabei ohne Bedeutung. So kann er direkt neben der Sicherungsklappe versenkbar in der Ladebordwand angeordnet sein. Er kann aber auch ausserhalb der Ladebordwand angeordnet sein, wodurch sich lediglich die Länge der Welle verlängert, über welche der Betätigungshebel die Feder und damit die Sicherungsklappe aktiviert.

Ferner kann mit einem Betätigungshebel lediglich eine Sicherungsklappe betätigt werden, oder aber mehrere Sicherungsklappen in einer Reihe. Die unterschiedlichen Möglichkeiten sollen von der vorliegenden Erfindung umfasst sein.

Ebenso kann sich die Feder unter der gesamten Breite der Sicherungsklappe erstrecken oder aber nur unter einem kleinen Teil. Es können ferner mehrere Federn unter der Sicherungsklappe angeordnet sein. Auch hier sollen der vorliegenden Erfindung keine Grenzen gesetzt sein.

Neben der oben genannten Feder ist in der Vorrichtung desweiteren die Nullpunktfeder vorgesehen, welche das Öffnen der Sicherungsklappe unterstützt. Sie wird zwischen der Sicherungsklappe und dem Hohlprofil eingespannt. Anstelle der Nullpunktfeder kann natürlich auch eine andere Feder verwendet werden, welche die Funktion einer Nullpunktfeder erfüllen kann.

Der grosse Vorteil der vorliegenden Erfindung liegt darin, dass die Sicherungsklappe nach einem Überfahren wieder in ihre Öffnungslage zurückgeführt werden kann, wenn sich der Betätigungshebel in einer entsprechenden Position befindet. So wird verhindert, dass der Betätigungshebel nach jedem Überfahren der Sicherungsklappen mit einem Gegenstand immer wieder betätigt werden muss.

Trotz dieser Möglichkeit ist es nach wie vor möglich, die Sicherungsklappen nach dem Überfahren in ihrer Schliesslage zu behalten. Auch dafür muss lediglich der Betätigungshebel in die entsprechende Position geführt werden.

Durch die unterschiedlichen Möglichkeiten der Positionierung des Betätigungshebels und den damit verbundenen Folgen ist es beispielsweise auch möglich, nur bestimmte Sicherungsklappen wieder nach oben zu führen. Die Sicherungsklappen, welche nicht gebraucht werden, können durchaus in der Tragfläche verbleiben. So springen bei einem Beladen nur die Sicherungsklappen nach oben, welche anschliessend für das Absichern eines Gegenstandes auf der Tragfläche verantwortlich sind.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische Seitenansicht eines Hohlprofils einer Ladebordwand mit einer Abrollsicherung gemäss der vorliegenden Erfindung in geschlossenem Zustand;
Figur 2 eine schematische Seitenansicht der Abrollsicherung gemäss Figur 1 in geöffnetem Zustand;
Figur 3 eine schematische Seitenansicht der Abrollsicherung gemäss Figur 1 in dem Zustand, in welchem die Sicherungsklappe nach dem Überfahren in geschlossener Stellung bleibt;
Figur 4 eine schematische Seitenansicht der Abrollsicherung gemäss Figur 1 in dem Zustand, in welchem die Sicherungsklappe nach dem Überfahren wieder in die geöffnete Stellung zurückgeführt wird; und
Figur 5 eine perspektivische Ansicht eines Teils einer Ladebordwand mit der Abrollsicherung in geöffnetem Zustand.

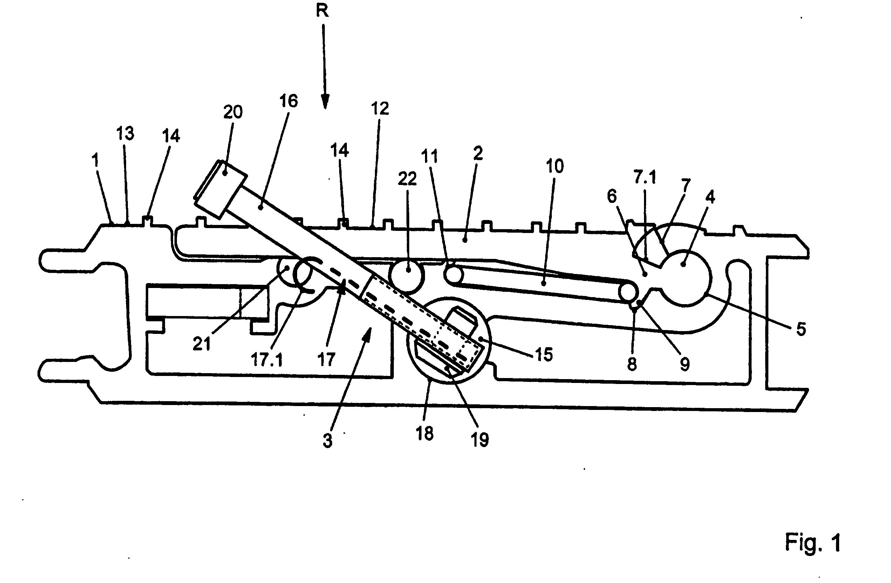

Eine Ladebordwand besteht aus mehreren zusammengeschweissten, stranggepressten Hohlprofilen 1, von welchen in den Figuren 1 bis 4 nur jeweils eines gezeigt wird. In einzelne dieser Hohlprofile 1 wird eine Vorrichtung R zum Sichern von Gegenständen, eine sogenannte Abrollsicherung, eingesetzt. Diese Abrollsicherung weist eine Sicherungsklappe 2 sowie einer Einrichtung 3 zum Betätigen der Sicherungsklappe 2 auf.

Einends ist der Sicherungsklappe 2 ein wellenförmiger Wulst 4 angeformt, welcher in einer dafür vorgesehenen Ausnehmung 5 in dem Hohlprofil 1 drehbar angeordnet ist.

Der Wulst 4 der Sicherungsklappe 2 geht in einen Steg 6 über, welcher den Wulst 4 mit der Sicherungsklappe 2 verbindet. Dieser Steg 6 formt mit dem Wulst 4 und der Sicherungsklappe 2 eine gebogene Ausnehmung 7.1, in welche ein Anschlag 7 eingreift, wenn sich die Sicherungsklappe 2 in geöffnetem Zustand befindet. Durch den Anschlag 7 wird die Drehbarkeit der Sicherungsklappe 2 begrenzt.

Auf der Unterseite des Steges 6 besitzt die Sicherungsklappe 2 eine Nut 8, welche durch eine Hakenleiste 9 gebildet wird. Die Nut 8 dient dem Einspannen einer Nullpunktfeder 10 zwischen der Sicherungsklappe 2 und einer weiteren Nut 11 in dem Hohlprofil 1.

In geschlossenem Zustand bildet eine Oberfläche 12 der Sicherungsklappe 2 eine Ebene mit der Oberfläche 13 der Hohlprofils 1 und damit mit der Ladebordwand. Beide Oberflächen 12 und 13 sind mit Querleisten 14 versehen, die ein Befahren des Hohlprofils und damit der Ladebordwand erleichtern sollen.

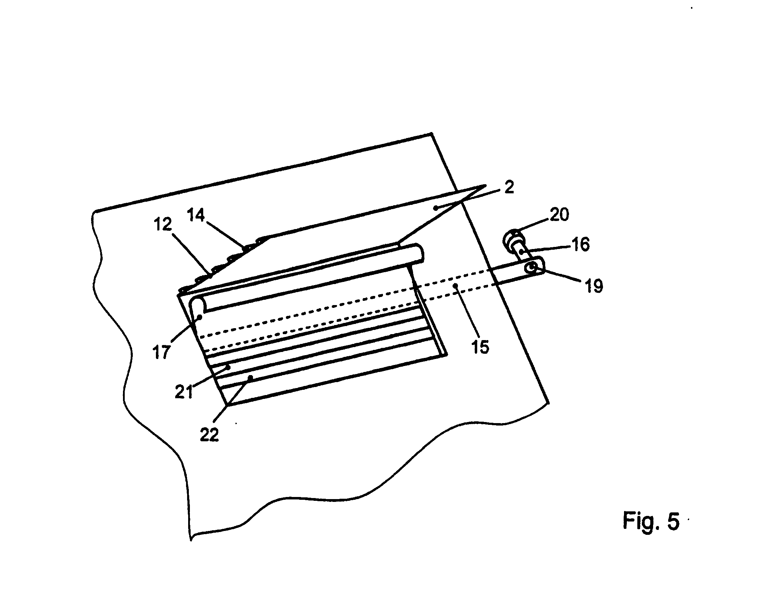

Die Einrichtung 3 weist eine Welle 15, einen Betätigungshebel 16 sowie einer Feder 17 auf. Die Welle 15 verläuft in einer Wellennut 18 des Hohlprofils 1 und ist, wie aus Figur 5 ersichtlich, zumindest so lang wie die Sicherungsklappe 2 sowie die Verbindungsstrecke zu dem Betätigungshebel 16, welcher mittels eines Bolzens 19 in der Welle 15 befestigt ist. Zur besseren Handhabung des Betätigungshebels 16 weist dieser an seinem oberen Ende einen Knauf 20 auf.

Die Feder 17 wird bevorzugt in einen Schlitz (nicht dargestellt) in der Welle 15 eingesteckt und dort befestigt. Die Feder 17 kann eine wie in Figur 5 gezeigte Federplatte sein oder auch aus einzelnen Federelementen bestehen. Sie besitzt an ihrem freien Ende eine Rundung 17.1.

Zwischen Sicherungsklappe 2 und dem Hohlprofil 1 sind desweiteren zwei schnurartige Dämpfungselemente 21 und 22 angeordnet, welche das Schliessen der Sicherungsklappe 2 dämpfen sollen. Die beiden Dämpfungselemente 21 und 23 erstrecken sich, wie aus Figur 5 ersichtlich, bevorzugt über die gesamte Breite des Hohlprofils 1.

Die Funktionsweise der vorliegenden Erfindung ist folgende:

Bei einem Befahren der Ladebordwand befinden sich der Betätigungshebel 16 und damit die Feder 17 in der Stellung, welche in Figur 1 dargestellt ist. Dadurch ist die Sicherungsklappe 2 nach unten geklappt und die Nullpunktfeder 10 befindet sich in Haltestellung für diese Schliesslage. Die Sicherungsklappe 2 bildet eine Ebene mit der Oberfläche 13 der Ladebordwand. Gegenstände können nun leicht darüber gerollt werden.

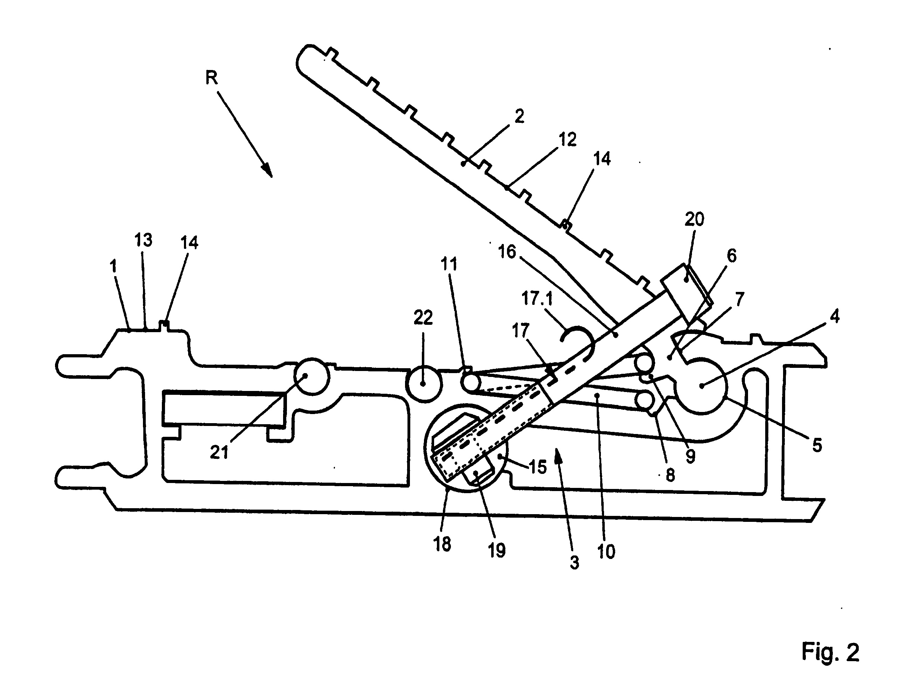

Soll nun ein Gegenstand gegen ein Abrollen gesichert werden, so wird der Betätigungshebel 16 in die in Figur 2 dargestellte Stellung gebracht. Durch das damit verbundene Drehen der Welle 15 wird auch die Feder 17 nach oben verschwenkt. Diese drückt gegen die Sicherungsklappe 2 und überwindet den Widerstand (Scheitelpunkt) der Nullpunktfeder 10, wodurch diese die Sicherungsklappe 2 nach oben drückt bis der Steg 6 an dem Anschlag 7 anliegt. Die Sicherungsklappe 2 befindet sich nun in geöffnetem Zustand und ein dagegen fahrender Gegenstand ist gegen ein Abrollen gesichert.

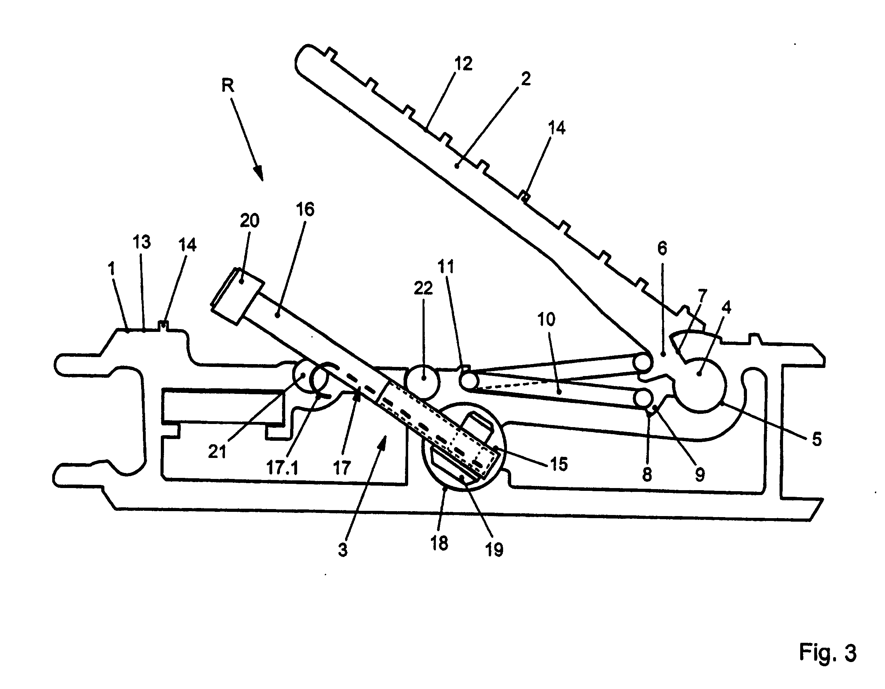

Werden der Betätigungshebel 16 und damit die Feder 17 wieder in ihre Ausgangsstellung gebracht (siehe Figur 3) und fährt jetzt ein Rad über die Sicherungsklappe, so klappt die Sicherungsklappe 2 nach unten und wird in einer Ausnehmung in dem Hohlprofil 1 aufgenommen. Die Sicherungsklappe 2 kann nach einem Überfahren nicht mehr nach oben klappen, da der Scheitelpunkt der Nullpunktfeder 10 überwunden wurde und diese die Sicherungsklappe 2 in Schliesslage hält. Um die Sicherungsklappe 2 wieder in die geöffnete Stellung zu bringen, müsste der Betätigungshebel 16 erneut gedreht werden.

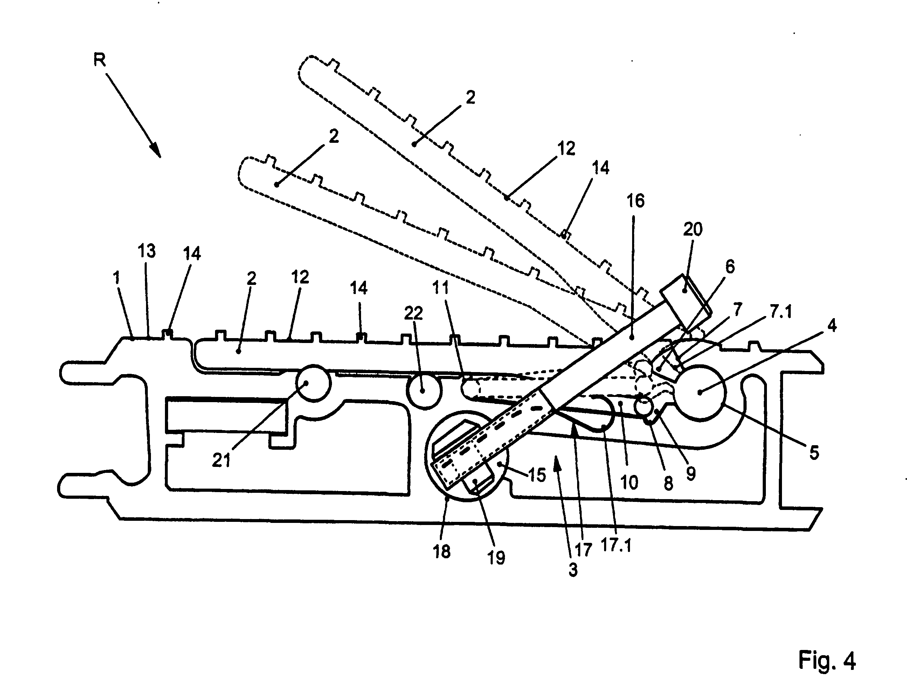

Wird der Betätigungshebel 16, wie aus Figur 4 ersichtlich, nicht wieder in seine Ausgangsstellung gebracht, so kann die Sicherungsklappe 2 von einem Gegenstand überrollt werden. Die Sicherungsklappe 2 bleibt nach dem Überfahren nicht, wie oben zu Figur 3 erklärt, in der Schliesslage, sondern klappt wieder in die geöffnete Stellung, was durch die gestrichelten Linien in Figur 4 deutlich gemacht wird. Beim Überfahren der Sicherungsklappe 2 wird zwar der Scheitelpunkt der Nullpunktfeder 10 überwunden und eigentlich müsste die Sicherungsklappe 2 nun in ihrer Schliesslage bleiben. Da sich jedoch der Betätigungshebel 16 und vor allem die Feder 17 nicht in ihrer Ausgangslage befinden, wird mit dem Überfahren der Sicherungsklappe 2 auch die Feder 17 nach unten gedrückt. Die Feder 17 wird dadurch in eine Spannstellung gebracht und befindet sich nicht mehr in Ruhestellung. Diese Spannstellung bewirkt, dass die Feder 17 in ihre Ruhestellung zurückschnellt, sobald die Last des Gegenstandes von der Sicherungsklappe 2 entfernt wurde. Durch den Druck der Feder 17 von unten wird der Scheitelpunkt der Nullpunktfeder 10 überwunden und die Sicherungsklappe 2 klappt wieder nach oben in die geöffnete Stellung.

Befindet sich also der Betätigungshebel 16 in der in Figur 4 dargestellten Position, so kann die Sicherungsklappe 2 nach jedem Überfahren immer wieder selbsttätig nach oben klappen und der Betätigungshebel 16 muss nicht nach jedem Überfahren erneut betätigt werden.

## Patentansprüche

1. Ladebordwand, mit zumindest einer um eine Achse (4) in einem Hohlprofil (1) drehbaren Sicherungsklappe (2), welche mit einer Nullpunktfeder (10) in Öffnungs- und in Schliesslage verbunden und dass die Nullpunktfeder (10) zwischen der Sicherungsklappe (2)und dem Hohlprofil (1) eingespannt ist
**dadurch gekennzeichnet, dass**
zum Öffnen und zum Halten der Sicherungsklappe (2) in Öffnungslage eine Feder (17) vorgesehen ist, welche unterhalb der Sicherungsklappe (2) gegen diese abstützbar angeordnet ist.

2. Ladebordwand nach Anspruch 1, **dadurch gekennzeichnet, dass** die Feder (17) in oder an einer Welle (15) angeordnet ist.

3. Ladebordwand nach Anspruch 2, **dadurch gekennzeichnet, dass** mit der Welle (15) ein Hebel (16) zum Drehen der Welle (15) verbunden ist.

4. Ladebordwand nach einem der Ansprüche 1 bis 3, **dadurch gekennzeichnet, dass** die Feder bevorzugt eine Länge aufweist, welche der Länge der Sicherungsklappe (2) entspricht.

5. Ladebordwand nach wenigstens einem der Ansprüche 1 bis 4, **dadurch gekennzeichnet, dass** unter der Sicherungsklappe (2) mehrere Federn (17) zueinander beabstandet angeordnet sind.

6. Ladebordwand nach wenigstens einem der Ansprüche 1 bis 5, **dadurch gekennzeichnet, dass** die Feder/n (17) an ihrem einem Ende mit einer Rundung (17.1) versehen ist/sind.

## Claims

1. Loading tailgate, having at least one safety flap (2), which is rotatable about a spindle (4) in a hollow profile (1) and is connected to a neutral spring (10) in the open position and in the closed position, which spring is clamped between the safety flap (2) and the hollow profile (1), **characterised in that**, to open and to retain the safety flap (2) in the open position, a spring (17) is provided, which is disposed beneath the safety flap (2) so as to be supportable relative to said flap.

2. Loading tailgate according to claim 1, **characterised in that** the spring (17) is disposed in or on a shaft (15).

3. Loading tail gate according to claim 2, **characterised in that** a lever (16) for rotating the shaft (15) is connected to the shaft (15).

4. Loading tailgate according to one of claims 1 to 3, **characterised in that** the spring preferably has a length which corresponds to the length of the safety flap (2).

5. Loading tailgate according to at least one of claims 1 to 4, **characterised in that** a plurality of springs (17) are disposed under the safety flap (2) with spacings therebetween.

6. Loading tailgate according to at least one of claims 1 to 5, **characterised in that** the spring/s (17) is/are provided at their one end with a rounded portion (17.1).

## Revendications

1. Hayon élévateur, avec au moins un volet de sécurité (2), pouvant pivoter autour d'un axe (4) dans un profilé creux (1), qui est relié à un ressort de point zéro (10) en position d'ouverture et de fermeture, lequel est tendu entre le volet de sécurité (2) et le profilé creux (1),
**caractérisé par le fait que**
il est prévu, pour l'ouverture et le maintien du volet de sécurité (2) en position d'ouverture, un ressort (17) qui est disposé sous le volet de sécurité (2) de manière à pouvoir s'appuyer sur ce dernier.

2. Hayon élévateur selon la revendication 1, **caractérisé par le fait que** le ressort (17) est disposé dans ou sur un arbre (15).

3. Hayon élévateur selon la revendication 2, **caractérisé par le fait qu'**à l'arbre (15) est relié un levier (16) destiné à faire tourner l'arbre (15).

4. Hayon élévateur selon l'une des revendications 1 à 3, **caractérisé par le fait que** le ressort présente, de préférence, une longueur correspondant à la longueur du volet de sécurité (2).

5. Hayon élévateur selon au moins l'une des revendications 1 à 4, **caractérisé par le fait que** sous le volet de sécurité (2) sont disposés plusieurs ressorts (17) distants l'un de l'autre.

6. Hayon élévateur selon l'une des revendications 1 à 5, **caractérisé par le fait que** le ou les ressorts (17) est/sont pourvu(s), à l'une de ses/leurs extrémités, d'un arrondi (17.1).
